# EUROPÄISCHE PATENTSCHRIFT

(11) **EP 1 232 489 B1**
(45) Veröffentlichungstag und Bekanntmachung des Hinweises auf die Patenterteilung: **13.08.2003**
(21) Anmeldenummer: 00974535.7
(22) Anmeldetag: 14.11.2000
(51) Int. Cl.: G08B 17/107, G01N 21/53

(54) **STREULICHTDETEKTOR**
DETECTOR FOR SCATTERED LIGHT
DETECTEUR A LUMIERE DIFFUSEE

(30) Priorität: 17.11.1999 DE 19955362
(43) Veröffentlichungstag der Anmeldung: 21.08.2002
(73) Patentinhaber: Wagner Alarm- und Sicherungssysteme GmbH, 30853 Langenhagen (DE)
(72) Erfinder: PREIKSZAS, Kai-Uwe, 63743 Aschaffenburg-Gailbach (DE); SIEMENS, Andreas, 30880 Laatzen (DE)
(74) Vertreter: Rupprecht, Kay, Dipl.-Ing.
(86) Internationale Anmeldenummer: EP0011258
(87) Internationale Veröffentlichungsnummer: WO01037235

(56) Entgegenhaltungen:
- EP-A- 0 463 795
- EP-A- 0 729 024
- US-A- 4 906 978
- US-A- 5 841 534

## Beschreibung

Die vorliegende Erfindung betrifft einen Streulichtdetektor als Teil eines Gefahrenmelders, insbesondere zum Detektieren von Partikeln in einem Trägermedium, mit einem Gehäuse, mit einer Einlaßöffnung und einer Auslaßöffnung in dem Gehäuse, zwischen denen das Trägermedium das Gehäuse auf einem Strömungspfad durchströmt, mit einer Lichtquelle, die Licht auf ein Streulichtzentrum richtet, das auf dem Strömungspfad liegt, mit einem Empfänger für einen Teil des im Streulichtzentrum an Partikeln gestreuten Lichts und mit einer Lichtfalle für nicht im Streulichtzentrum gestreutes Licht.

Derartige Streulichtdetektoren sind bekannt und dienen insbesondere in aspirativen Brandmeldeanlagen dem Detektieren von Feststoff- oder Flüssigkeitspartikeln, wobei das Trägermedium aus einer repräsentativen Teilmenge der Raumluft eines zu überwachenden Raumes oder der Gerätekühlluft eines zu überwachenden Gerätes besteht. Bei einer aspirativen Meldeanlage wird diese repräsentative Lufteilmenge aktiv mittels eines Lüfters angesaugt und in die Einlaßöffnung des Streulichtdetektors eingespeist. Bei zu überwachenden Geräten wie beispielsweise EDV-Anlagen oder einzelnen Komponenten davon sowie in ähnlichen elektronischen Einrichtungen, wie beispielsweise Meß-, Steuer- und Regelanlagen, Vermittlungseinrichtungen und Nebenstellenanlagen, ist es grundsätzlich auch möglich, die Eigenströmung der Gerätekühlluft dazu zu verwenden, eine repräsentative Teilmenge der Gerätekühlluft als Trägermedium in die Einlaßöffnung des Streulichtdetektors einzuspeisen. Dann ist kein aktiv ansaugender Lüfter nötig.

Während das Trägermedium das Streulichtzentrum auf seinem Strömungspfad durch das Gehäuse des Streulichtdetektors durchströmt, durchquert das Licht der Lichtquelle das Streulichtzentrum und somit das dort durchströmende Trägermedium und wird, sofern es nicht an Partikeln in dem Trägermedium gestreut wird, in der gegenüberliegenden Lichtfalle absorbiert. Das ist der Betriebszustand, in welchem sich der Streulichtdetektor überwiegend befindet. Trifft der Lichtstrahl auf ein Partikel, welches beispielsweise ein Rauchpartikel oder ein Rauchaerosol sein kann, welches einen ersten Hinweis auf einen Entstehungsbrand liefert, lenkt dieses Partikel einen Bruchteil des Licht als Streulicht aus seiner ursprünglichen Richtung ab, welches dann durch einen höchst lichtempfindlichen Empfänger aufgenommen und mittels einer nachfolgenden Auswerteschaltung in seiner Intensität gemessen wird. Ist ein gewisser Schwellwert der Lichtintensität überschritten, wird ein Alarm ausgelöst.

Aus der EP 0 756 703 B1 und der EP 0 729 024 A2 sind Streulichtdetektoren zum Detektieren von Partikeln in einem Trägermedium bekannt, bei denen das Gehäuse in Längsrichtung von dem Trägermedium durchstömt wird und entweder mehrere einander gegenüberliegende Lichtquellen (EP '703) oder ein Empfänger (EP '024) an der Längswandung des Gehäuses angeordnet sind. Die Nachteile dieser bekannten Streulichtdetektoren bestehen zum einen darin, daß bei einander gegenüberliegenden Lichtquellen die Gefahr besteht, daß ein Großteil des ausgesandten Lichtes einer Lichtquelle auf dem Glaskörper einer gegenüberliegenden Lichtquelle reflektiert wird und ein Teil dieses reflektierten Lichts dann ungewollt auf den lichtempfindlichen Empfänger fällt und somit die Ermittlung des Streulichtanteils erschwert. Zum anderen ist es in bezug auf die Anordnung des Empfängers an der Längswandung des Gehäuses von Nachteil, daß dieser leicht verschmutzen kann, da er im Strömungspfad angeordnet ist, was zu einer reduzierten Ansprechempfindlichkeit oder aber zu einer erhöhten Fehlerrate führen kann.

Aus der EP 0 463 795 B1 und der WO 97/42485 sind Streulichtdetektoren der eingangs genannten Art bekannt, bei denen der Strömungspfad des Trägermediums quer zur Längsrichtung des Gehäuses und damit quer zur Empfängerachse verläuft. Die Nachteile dieser bekannten Streulichtdetektoren liegen insbesondere darin, daß die quer an dem Gehäuse ansetzenden Einlaß- und Auslaßöffnungen mit den daran anzuschließenden Zuleitungen für das Trägermedium weder eine kompakte Bauweise des Streulichtdetektors selbst noch seine kompakte Anordnung innerhalb eines größeren Meldergehäuses, in dem z.B. auch ein Luftstromsensor und die Auswerteschaltung untergebracht sind, ermöglicht.

Schließlich ist aus der EP 0 257 248 A2 ein Streulichtmeßgerät der eingangs genannten Art bekannt, das eine trichter- oder paraboloidförmige Lichtfalle für nicht im Streulichtzentrum gestreutes Licht aufweist, die sich in Richtung der Lichtquelle öffnet.

Aufgabe der vorliegenden Erfindung ist es, einen Streulichtdetektor der eingangs genannten Art, d.h. mit einem Gehäuse, mit einer Einlaßöffnung und einer Auslaßöffnung in dem Gehäuse, zwischen denen das Trägermedium das Gehäuse auf einem Strömungspfad durchströmt, mit einer Lichtquelle, die Licht auf ein Streulichtzentrum richtet, das auf dem Strömungspfad liegt, mit einem Empfänger für einen Teil des im Streulichtzentrum an Partikeln gestreuten Lichts, und mit einer Lichtfalle für nicht im Streulichtzentrum gestreutes Licht, derart weiterzubilden, daß eine kompakte Bauform und dennoch eine hohe Ansprechempfindlichkeit gewährleistet ist.

Diese Aufgabe wird bei einem Streulichtdetektor der vorstehend beschriebenen Art mit zwei alternativen und höchst vorteilhaften Gestaltungen der Lichtfalle gelöst, wie sie in den Patentansprüchen 1 und 2 beschrieben sind. Gemäß einer ersten Alternative ist vorgesehen, daß die Lichtquelle außerhalb des Strömungspfades angeordnet ist, des weiteren, daß die Mittelachse des Lichtkegels der Lichtquelle wenigstens teilweise parallel zu oder auf der Mittellinie des Strömungspfades verläuft, und schließlich, daß die der Lichtquelle zugeordnete Lichtfalle Teil des den Strömungspfad leitenden Strömungskanals ist. Gemäß einer zweiten Alternative, die auch kummulativ gewählt werden kann, ist der Empfänger außerhalb des Strömungspfades angeordnet, und die Empfängerachse verläuft wenigstens teilweise parallel zu oder auf der Mittellinie des Strömungspfades, und die dem Empfänger zugeordnete Lichtfalle ist Teil des den Strömungspfad leitenden Strömungskanals.

Die Vorteile beider erfindungsgemäßen Ausbildungen des Streulichtdetektors liegen darin, daß sowohl die der Lichtquelle zugeordnete Lichtfalle als auch die dem Empfänger zugeordnete Lichtfalle gleichzeitig ein Teil des Strömungskanals ist, der das Trägermedium, also beispielsweise die repräsentative Teilmenge der Gerätekühlluft einer EDV-Anlage, auf dem Strömungspfad durch den Streulichtdetektor leitet. Hierbei ist es von Vorteil, wenn- wie in einer Ausführungsform des erfindungsgemäßen Streulichtdetektors vorgesehen - der Strömungskanal dort, wo er als Lichtfalle wirkt, eine Biegung aufweist, so daß der Strömungspfad des Trägermediums eine Umlenkung erfährt und somit die Lichtquelle in Richtung der Mittelachse ihres Lichtkegels und/oder der Empfänger in Richtung der Empfängerachse "ins Schwarze blickt", weshalb störende Reflexionen ausgeschlossen werden.

Vorteilhafte Weiterbildungen der Erfindung sind in den Unteransprüchen angegeben.

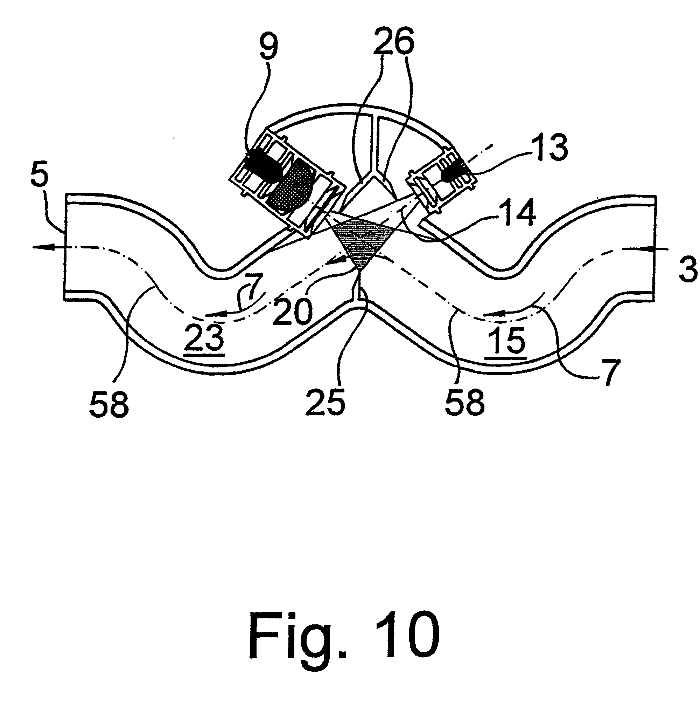

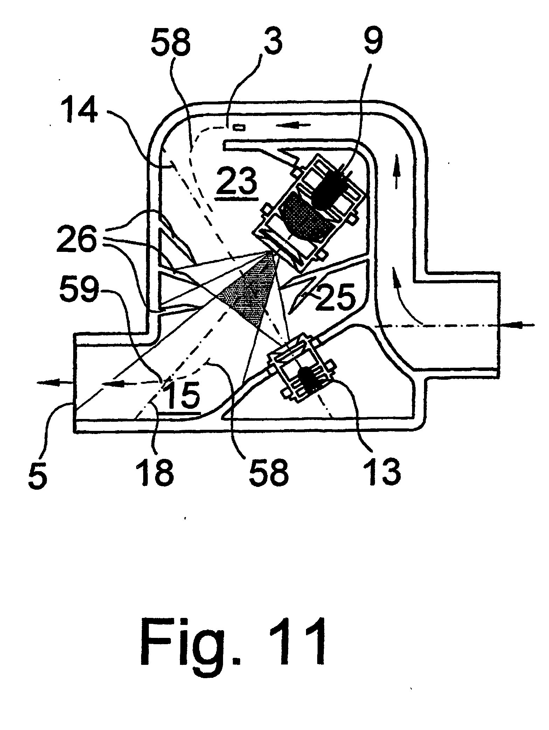

Zunächst sind zwei alternative Weiterbildungen der Gestalt der Lichtfalle, die der Lichtquelle zugeordnet ist, vorgesehen. Gemäß einer ersten Alternative ist diese Lichtfalle derart ausgebildet, daß sie - in einer Querschnittsebene betrachtet, welche senkrecht auf der durch die Empfängerachse und die Mittelachse des Lichtkegels der Lichtquelle gebildete Empfängerachsenebene steht - die Form eines Trichters aufweist, der sich in Richtung der Lichtquelle beziehungsweise, siehe Fig. 10 und 11, in Richtung des Empfängers öffnet. Gemäß einer zweiten Alternative ist die Lichtfalle derart ausgebildet, daß sie - wiederum in der vorstehend beschriebenen Querschnittsebene betrachtet - annähernd die Form einer Parabel aufweist, deren Öffnung zur Lichtquelle beziehungsweise, siehe Fig. 10 und 11, in Richtung des Empfängers weist. Die Vorteile der erfindungsgemäßen Ausbildung der Lichtfalle liegen in beiden Fällen darin, daß das von der Lichtquelle ausgesandte und nicht im Streulichtzentrum gestreute Licht nach mehrfacher Reflexion an den gegen die Strömungsrichtung des Trägermediums konvergierenden Wänden der Lichtfalle stark abgeschwächt wird und somit den lichtempfindlichen Empfänger selbst bei höchster Empfindlichkeit nicht mehr beeinflussen. Was die Lage der Empfängerachsenebene betrifft, so ist davon auszugehen, daß diese horizontal ausgerichtet ist, wenn das gesamte Detektorgehäuse in einer horizontalen Ebene steht. Die in den beiden alternativen Ausführungsformen der Lichtfalle angegebenen Querschnittsformen können beinhalten, daß die Lichtfalle überwiegend trichterförmig oder paraboloidförmig ausgebildet ist, wobei selbstverständlich in Richtung der Einlaßöffnung ein genügend breiter offener Abschnitt zum Eintritt des Trägermediums vorgesehen ist.

Für die Form der Lichtfalle ist des weitern vorgesehen, daß sie quer zu der beschriebenen Querschnittsebene derart ausgebildet ist, daß sie den Strömungspfad des Trägermediums in der Empfängerachsenebene oder parallel dazu im Bogen durch das Streulichtzentrum zur Auslaßöffnung leitet. Hierbei sorgt die bogenförmige Kurvenführung an der Innenwandung der Lichtfalle für eine weitestgehend verwirbelungsfreie Umlenkung des Strömungspfades von der Einlaßöffnung in Richtung auf das Streulichtzentrum.

Da die Gestaltung des Strömungspfads für das Trägermedium durch das Gehäuse des Streulichtdetektors einen großen Einfluß auf die Leistungsfähigkeit des Detektors hat, befassen sich auch die folgenden vier Weiterbildungen mit der Führung des Strömungspfads. Zum einen ist vorgesehen, daß die Mittelachse des Lichtkegels der Lichtquelle in der Empfängerachsenebene auf einen Eingangskanal oder, alternativ dazu, auf einen Ausgangskanal gerichtet ist, welcher sich in Strömungsrichtung an die Einlaßöffnung beziehungsweise, in bezug auf den Ausgangskanal, an das Streulichtzentrum anschließt und in die Lichtfalle übergeht. Zum anderen ist die Formgebung der Lichtfalle für eine Steigerung der Empfindlichkeit des Detektors von wesentlicher Bedeutung. Diesbezüglich sieht eine erste Weiterbildung des erfindungsgemäßen Streulichtdetektors vor, daß die Lichtfalle in einem Bogen auf die Mittellinie des Eingangskanals beziehungsweise des Ausgangskanals zu verläuft. Somit wird die vorstehend beschriebene Dämfung des nicht gestreuten Lichtanteils und damit die Detektionssicherheit erhöht. Des weiteren ist es vorteilhaft, wenn ergänzend hierzu der Strömungspfad nach der Einlaßöffnung zunächst parallel zur Empfängerachse verläuft, bevor er nach Passieren des Einlaßkanals durch die Lichtfalle im Bogen durch das Streulichtzentrum zur Auslaßöffnung führt. Schließlich wird der Strömungspfad vor der Einlaßöffnung und/oder nach der Auslaßöffnung wenigstens einmal, vorzugsweise aber zweimal, um wenigstens 90° umgelenkt. Jede einzelne dieser Weiterbildungen trägt dazu bei, den Einfall von nicht an Partikeln im Streulichtzentrum gestreutem Licht in den Empfänger zu vermeiden. Ein Maß für die Empfindlichkeit eines Streulichtdetektors ist nämlich der sogenannte "Kammerwert", der durch das Ausgangssignal des Lichtempfängers für den Fall definiert ist, daß keine Partikel im Streulichtzentrum vorhanden sind. Die mehrfachen Richtungsänderungen des Strömungspfades sind unter anderem deshalb besonders vorteilhaft, da dadurch vermieden wird, daß Außenlicht in das Streulichtzentrum eindringt, wenn kein Ansaugrohr bzw. kein Ableitungsrohr an dem Gehäuse des Streulichtdetektors angeschlossen ist.

Die folgenden Weiterbildungen befassen sich mit der Lichtquelle, deren Anordnung, Ausbildung und Ausrichtung ebenfalls einen großen Einfluß auf die Leistungsfähigkeit eines Streulichtdetektors haben. Um eine maximale Ansprechempfindlichkeit des Detektors zu erreichen, wird eine hohe Lichtintensität benötigt, die bei dem vorliegenden Streulichtdetektor vorzugsweise dadurch erreicht wird, daß die Lichtquelle zwei Lichtemitter aufweist, die in der vorstehend bereits beschriebenen Querschnittsebene übereinander und somit im selben Winkel zur Emfpängerachse angeordnet sind. Darüber hinaus ist es für die im Streulichtzentrum präsente Lichtmenge von Vorteil, wenn die beiden Lichtemitter derart zur Empfängerachsenebene geneigt angeordnet sind, daß sich ihre Lichtkegel im Streulichtzentrum kreuzen. Wiederum trägt auch hier jede einzelne der drei Weiterbildungen zu einer Erhöhung der Ansprechempfindlichkeit des erfindungsgemäßen Detektors bei. So kann dieser Detektor beispielsweise auch zur Überwachung von Reinsträumen (z.B. Chipfertigung) eingesetzt werden, bei der die kleinste Anzahl von Partikeln die Fertigung der Chips für mehrere Wochen lahmlegen kann. In solchen Anwendungsbereichen ist es möglich, die Ansprechempfindlichkeit heraufzusetzen, sofern die technischen Möglichkeiten des Detektors es zulassen, da es in Reinsträumen wegen des fehlenden Staubs und der fehlenden Feuchtigkeit im allgemeinen keinen Anlaß zu Täuschungsalarmen gibt. Die Übereinander-Anordnung der beiden Lichtemitter ist von keinem der beschriebenen Streulichtdetektoren bekannt. Bei der Verwendung mehrerer Lichtemitter, die man bei räumlicher Trennung voneinander auch als einzelne Lichtquellen bezeichnen kann, sind bei den bekannten Streulichtdetektoren entweder symmetrische Anordnungen um die Empfängerachse (EP '703) oder Anordnungen nebeneinander vorgesehen. Beide bekannten Anordnungen mehrerer Lichtemitter haben Nachteile. Bei der symmetrischen Anordnung um die Empfängerachse müßte für jeden Lichtemitter eine Blende vorhanden sein, die verhindert, daß direktes Licht in den Empfänger einfällt, wobei dann allerdings das Licht des einen Emitters an der Blende des anderen Emitters reflektiert und so zumindest teilweise ungewollt in den Empfänger gelangt. Die Nebeneinander-Anordnung von Lichtemittern hat den Nachteil, daß dann die Konstruktion der notwendigen Blenden und Lichtfallen aufwendiger wäre, zudem die Lichtfalle größer ausfallen müßte, um beide Lichtkegel auffangen zu können.

Schließlich kann es im Hinblick auf die elektromagnetische Verträglichkeit des Streulichtdetektors von Vorteil sein, wenn dessen Gehäuse aus einem Kunststoff besteht, der elektrisch leitende Partikel enthält.

Der vorstehend beschriebene Streulichtdetektor kann beispielsweise Teil eines Gefahrenmelders sein, in dessen Gesamtgehäuse das Gehäuse des Streulichtdetektors, das auch als "Detektorkopf" bezeichnet wird, integriert sein kann. In bezug auf das Gehäuse des Melders ist vorzgusweise vorgesehen, daß es aus drei Teilen besteht, nämlich aus einer Unterschale mit einem integrierten Strömungskanal zur Ableitung des Trägermediums in Strömungsrichtung hinter der Auslaßöffnung des Detektorkopfes, des weiteren aus einem Deckel für einen Teil des Strömungs-kanals, und schließlich aus einer Oberschale, die als Gehäusedeckel des Gefahrenmelders fungiert. Somit strömt das Trägermedium nur durch das Streulichtzentrum, den Strömungskanal und die Saugquelle, die im Falle einer aspirativen Brandmeldeanlage beispielsweise ein Lüfter zum Ansaugen der repräsentativen Luftteilmengen sein kann. Die Elektronik der Auswerteschaltung sowie die Anschlußklemmen bleiben außerhalb der abgedichteten Luftführung. Ein weiterer Vorteil sind die niedrigen Herstellungskosten: Das Gehäuse muß nur im Bereich der Luftführung luftdicht sein, während eine Dichtung zwischen Unterschale und Oberschale nicht mehr erforderlich ist. Auch müssen die Kabeleinführöffnungen nicht mehr luftdicht sein. Diese Vorteile machen sich besonders beim Einsatz des erfindungsgemäßen Streulichtdetektors in rauher Industrieumgebung mit gegebenenfalls aggressiver Umgebungsluft bemerkbar. Beispiele hierfür sind Galvanikbereiche bei der Platinenfertigung, Lackierstraßen und Batterienfertigung. In all diesen Arbeitsbereichen kommt es zur Anreicherung der Umgebungsluft mit Säuren oder Verdünnungsmitteln, vor denen die empfindliche Auswerteschaltung zu schützen ist. Insofern gereicht es zum Vorteil, daß der Strömungweg des Trägermediums gegenüber den übrigen Bauteilen des Streulichtdetektors, insbesondere gegenüber Elektronik und Kabeln, durch eine Dichtung getrennt ist, während ansonsten eine Abdichtung des Gehäuses nicht erforderlich ist.

Im folgenden werden ein erstes, ein zweites und ein drittes Ausführungsbeispiel des erfindungsgemäßen Streulichtdetektors anhand einer Zeichnung näher erläutert.

Es zeigen:
- Fig. 1: eine Draufsicht auf die Unterschale des Gehäuses des Detektorkopfes eines ersten Ausführungsbeispiels;
- Fig. 2: eine Draufsicht auf die Oberschale des Gehäuses des Detektorkopfes des ersten Ausführungsbeispiels;
- Fig. 3: eine ausschnittsweise Draufsicht auf die Unterschale mit Blick auf das Streulichtzentrum;
- Fig. 4: einen Schnitt in der Querschnittsebene 17 gemäß Fig. 3;
- Fig. 5: eine perspektivische Darstellung des Gehäuses des Detektorkopfes des ersten Ausführungsbeispiels;
- Fig. 6: eine Ansicht der Vorderseite (oben), eine Draufsicht (Mitte) und eine Ansicht der Rückseite (unten) eines Gefahrenmeldergehäuses;
- Fig. 7: eine Draufsicht auf die Unterschale des Gefahrenmeldergehäuses mit Stömungskanal, Streulichtzentrum und Lüfter;
- Fig. 8: einen Schnitt entlang der Linie A-A der Fig. 7;
- Fig. 9: einen Schnitt entlang der Linie B-B der Fig. 7;
- Fig. 10: eine Draufsicht auf die Unterschale des Gehäuses des Detektorkopfes eines zweiten Ausführungsbeispiels; und
- Fig. 11: eine Draufsicht auf die Unterschale des Gehäuses des Detektorkopfes eines dritten Ausführungsbeispiels.

Das im folgenden beschriebene erste Ausführungsbeispiel für einen Streulichtdetektor ist darauf ausgerichtet, als Teil einer aspirativen Brandmeldeanlage zu dienen. Somit ist das in den Patentansprüchen beschriebene Trägermedium Luft. Diese Luft wird, wie bei einer aspirativen Brandmeldeanlage üblich, mittels eines Lüfters angesaugt, was nachstehend ebenfalls beschrieben werden wird.

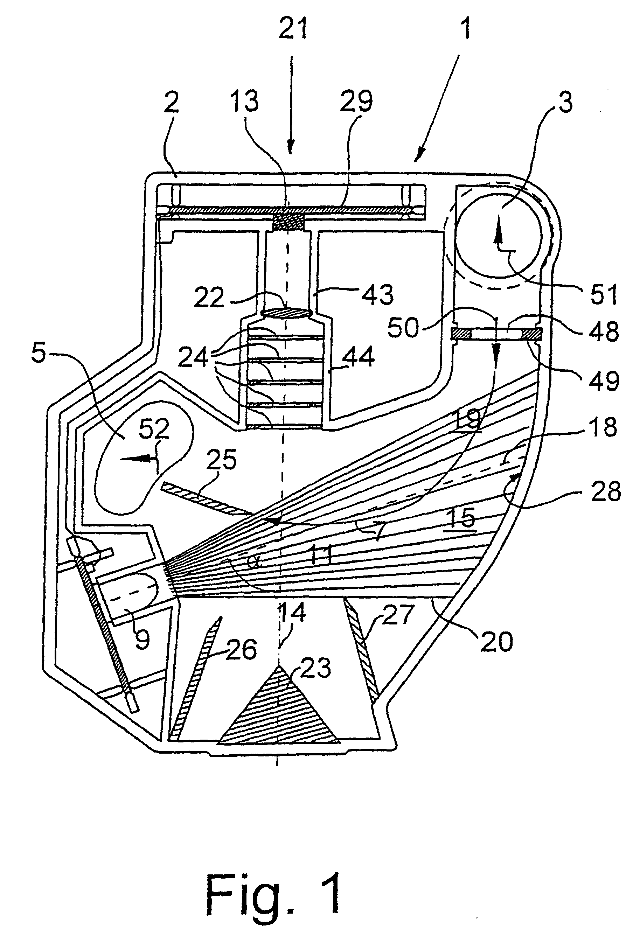

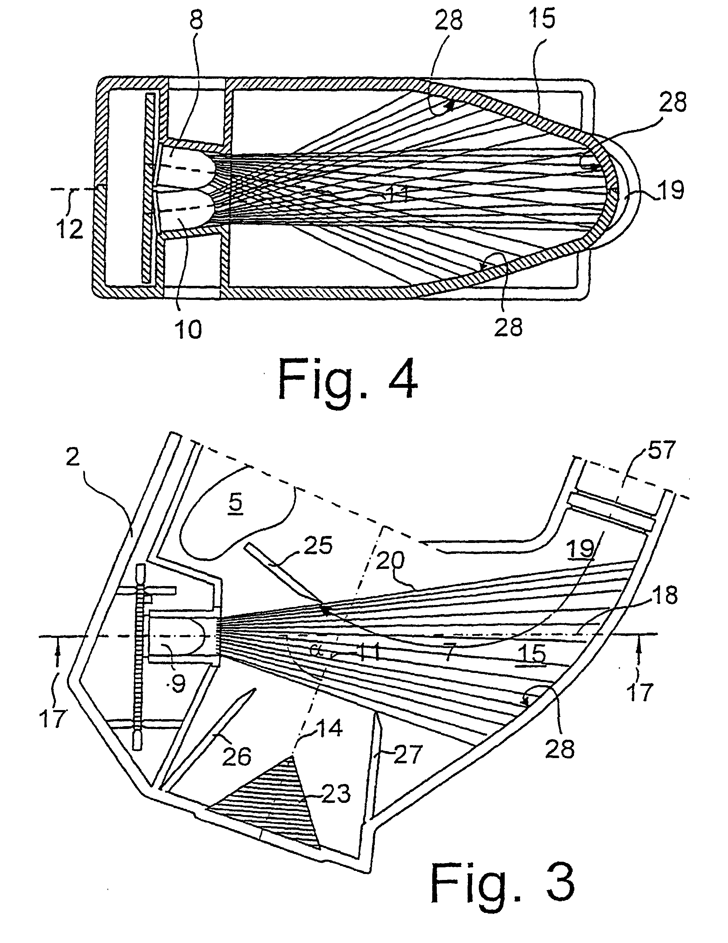

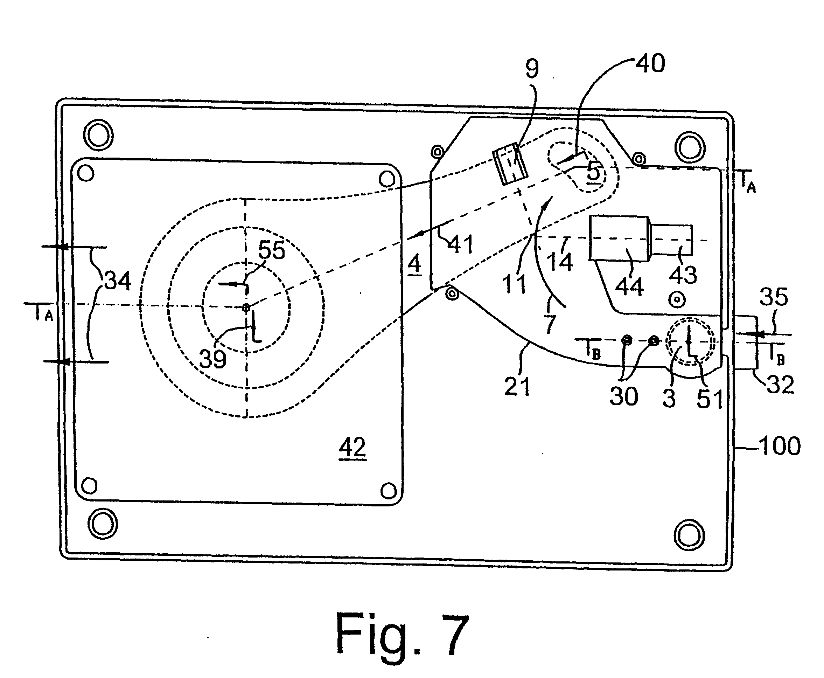

Fig. 1 zeigt eine Draufsicht auf die geöffnete Unterschale 2 eines Gehäuses 1 eines Streulichtdetektors, wobei der hier dargestellte Streulichtdetektor als Kernstück einer Brandmeldeanlage auch als Detektorkopf 21 bezeichnet ist. Das Gehäuse 1 dieses Detektorkopfes 21 weist eine Einlaßöffnung 3 und eine Auslaßöffnung 5 auf, zwischen denen die Luft als Trägermedium für eventuelle Partikel das Gehäuse 1 auf einem Strömungspfad 7 durchströmt. Der Streulichtdetektor ist des weiteren in bekannter Weise mit einer Lichtquelle 9 ausgestattet, die einen Lichtkegel 20 auf ein Streulichtzentrum 11 richtet, welches auf dem Strömungspfad 7 liegt, des weiteren mit einem Empfänger 13 in Form einer Fotodiode, die am hinteren Ende eines Empfängergehäuses 43 und vor einer Platine 29 angeordnet ist, und schließlich mit einer Lichtfalle 15 zum Absorbieren von nicht im Streulichtzentrum 11 gestreutem Licht. Dem Empfänger 13 vorgeschaltet ist eine Linse 22 sowie eine Reihenanordnung einiger Blenden (24), welche in einem Blendengehäuse (44) untergebracht sind, das sich an das Empfängergehäuse 43 anschließt. Gegenüber dem Emfänger 13 ist ein spitz zulaufender Lichtkegel 23 angeordnet, der als weitere Lichtfalle zum Schutz des Empfängers vor ungewollter Lichteinstrahlung dient. Des weiteren sind Blenden 25 bis 27 mit dem gleichen Zweck vorgesehen. Die Mittelachse des Lichtkegels 20 der Lichtquelle 9 ist mit der Bezugsziffer 18 bezeichnet, und diese Mittelachse 18 kreuzt sich mit der Empfängerachse 14 im Streulichtzentrum 11 unter Einschluß eines Winkels α. Die gegenüber der Lichtquelle 9 befindliche Lichtfalle 15 besitzt, was anhand von Fig. 4 noch erläutert werden wird, wenigstens teilweise eine Trichter- oder Paraboloidform und geht an ihrem konvergierenden Ende in einem Bogen in einen Einlaßkanal 19 über, welcher unter Zwischenschaltung einer Scheibe 49 zur Differenzdruckbildung, die eine Durchgangsöffnung 48 aufweist, mit der Einlaßöffnung 3 verbunden ist, und dessen Mittellinie mit der Bezugsziffer 57 bezeichnet ist. Die Innenwand 28 der Lichtfalle 15 verläuft somit in der hier dargestellten horizontalen Schnittebene von dem Eingangskanal 19 in Strömungsrichtung in einem Bogen und bestimmt somit den Strömungspfad 7, der zwischen der Einlaßöffnung 3 und der Auslaßöffnung 5 verläuft. Die Luftführung durch diesen Detektorkopf 21 zwischen der Einlaßöffnung 3 und der Auslaßöffnung 5 ist durch die Luftführungspfeile 50 (durch die Öffnung 48 in der Scheibe 49), 51 (90° umgelenkt), 7 (Strömungspfad) und 52 (90° umgelenkt) dargestellt. Hierbei strömt die Luft durch die Einlaßöffnung 3 in Richtung des Pfeils 51 zunächst senkrecht nach oben, bevor sie nach einer erneuten 90° Umlenkung in Richtung des Luftführungspfeils 50 in einer horizontalen Bewegungsrichtung zum Streulichtzentrum 11 strömt. Nach Passieren des Streulichtzentrums 11 verläßt die Luft den Detektorkopf 21 wieder durch die Auslaßöffnung 5, und zwar in Richtung des Pfeils 52 nach einer 90° Umlenkung senkrecht nach unten, wo sie in den Strömungskanal 4 (s. Fig. 7) eintritt.

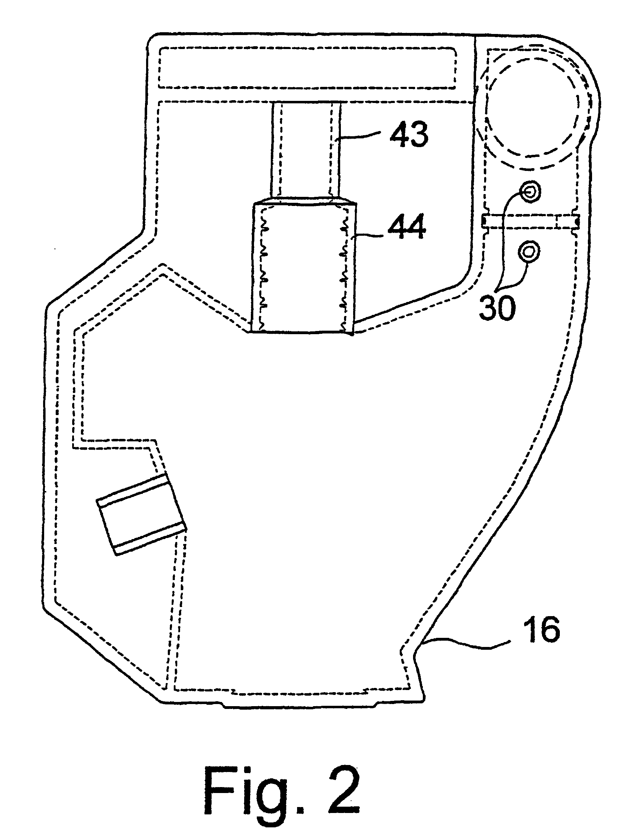

Fig. 2 zeigt eine Draufsicht auf die Oberschale 16 des Gehäuses 1 des Detektorkopfes 21, wie sie auf die anhand von Fig. 1 beschriebene Unterschale 2 paßt. Auf der Oberseite der Oberschale 16 sind zwei Anschlußnippel 30 für einen hier nicht dargestellten Luftstromsensor vorgesehen. Dabei befindet sich ein Anschlußnippel in Strömungsrichtung vor der in Fig. 1 beschriebenen Scheibe 49, und ein Anschlußnippel dahinter, um eine Differenzdruckbildung zu ermöglichen.

Fig. 3 zeigt eine Teil-Draufsicht auf die geöffnete Unterschale 2 des Detektorkopfes 21. Alle hier dargestellten Bauteile wurden bereits anhand von Fig. 1 erläutert. Im Unterschied zu Fig. 1 ist hier in Fig. 3 allerdings eine Schnittlinie 17-17 eingetragen, welche die Querschnittsebene 17 bezeichnet, die senkrecht auf der durch die Empfängerachse 14 und die Mittelachse 18 des Lichtkegels 20 der Lichtquelle 9 gebildete, horizontale Empfängerachsenebene 12 steht.

Fig. 4 zeigt einen Schnitt entlang der Linie 17-17 der Fig. 3 und damit eine Ansicht der Querschnittsebene 17 durch den Teil des Gehäuses, welcher die Lichtquelle 9, das Streulichtzentrum 11 und die Lichtfalle 15 enthält. Anhand von Fig. 4 ist ersichtlich, daß die Lichtquelle 9 aus zwei Lichtemittern 8, 10 besteht, die in der Querschnittsebene 17, also der Bildebene der Fig. 4, übereinander angeordnet sind. Beide Lichtemitter 8, 10 sind derart zur Empfängerachsenebene 12 geneigt angeordnet, daß sich ihre Lichtkegel im Streulichtzentrum 11 kreuzen. Zur Empfängerachse 14 nehmen aber beide Lichtemitter 8, 10 denselben Winkel α ein (vgl. Fig. 1 und 3). Aus der Schnittdarstellung der Fig. 4 wird die Formgebung der Lichtfalle 15 deutlich: In der Querschnittsebene 17 betrachtet, also in der Bildebene der Fig. 4, ist die Lichtfalle 15 trichterförmig oder auch parabelförmig ausgebildet, wobei sich der Trichter bzw. die Parabel in Richtung auf die Lichtemitter 8, 10 öffnet und nach hinten hin konvergiert. Darüber hinaus verläuft die Innenwand 28 nach hinten, d.h. entgegen der Strömungsrichtung, bogenförmig nach außen in Richtung des Einlaßkanals 19. Diese Formgebung der Lichtfalle 15 ist äußerst vorteilhaft, da sich das auf die Innenwand 28 auftreffende Licht durch mehrfache Reflexion so stark abschwächt, daß von diesem direkten Licht kein oder kein nennenswerter Anteil den Empfänger erreicht.

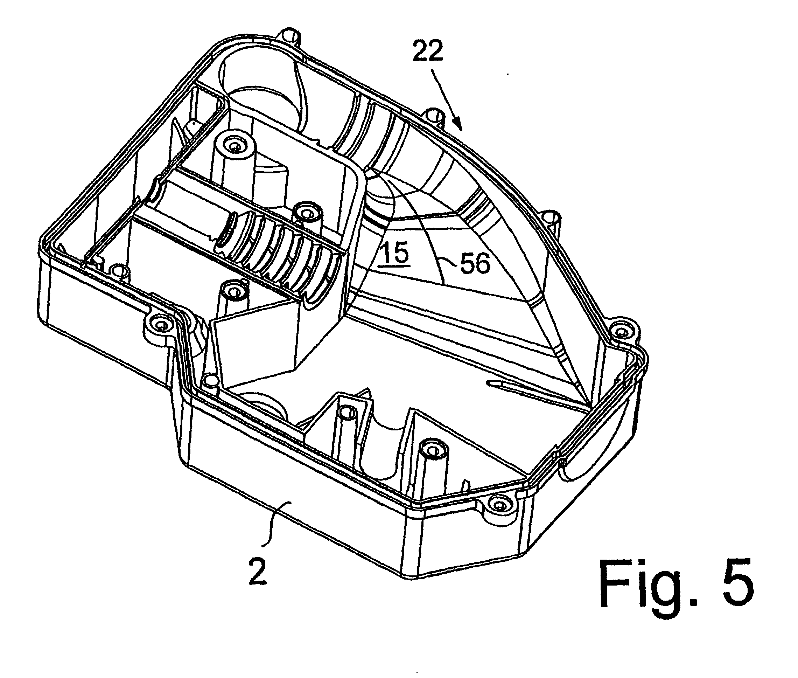

Fig. 5 zeigt eine perspektivische Darstellung des Gehäuses 1 des Detektorkopfes 21 gemäß Fig. 1. Der besseren Übersicht halber sind in dieser Darstellung die Bezugsziffern weitestgehend weggelassen und Einbauten wie die Lichtquelle 9, der Empfänger 13, die zum Empfänger 13 gehörende Platine 29, die Linse 22, die Blenden 24 bis 27, die Lichtfalle 23 und die Scheibe 49 nicht gezeigt. Diese Perspektive dient einzig und allein der besseren Verdeutlichung der Form der Lichtfalle 15, die sich in einem Linksbogen 56 auf die Mittelachse 57 des Eingangskanals 19 verjüngt und somit - im Querschnitt betrachtet - eine Trichter- oder Parabelform bildet.

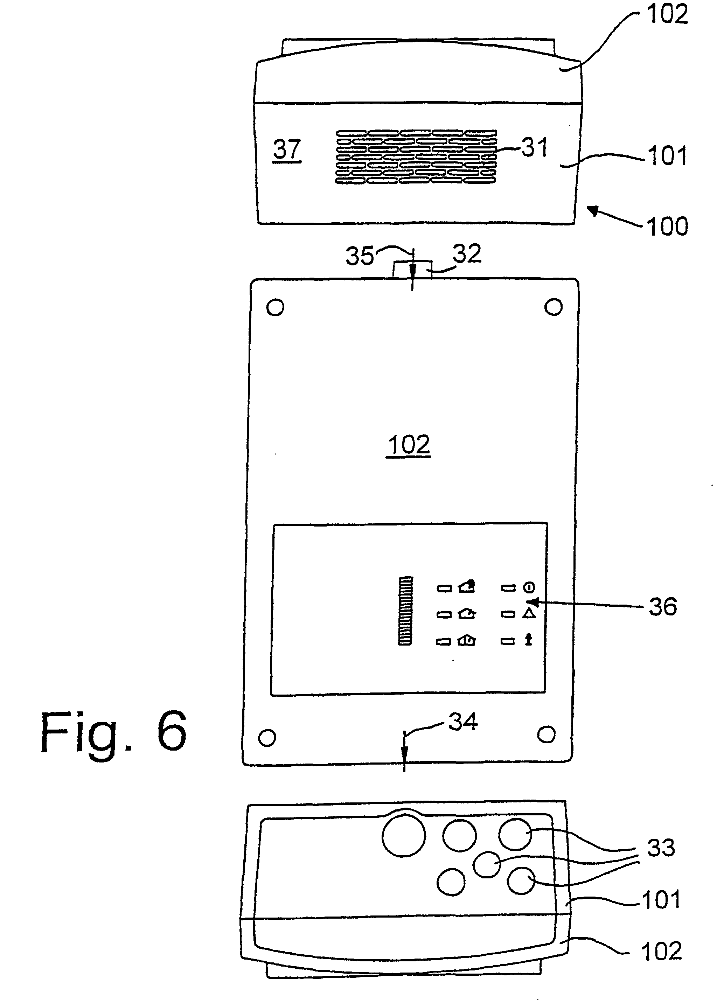

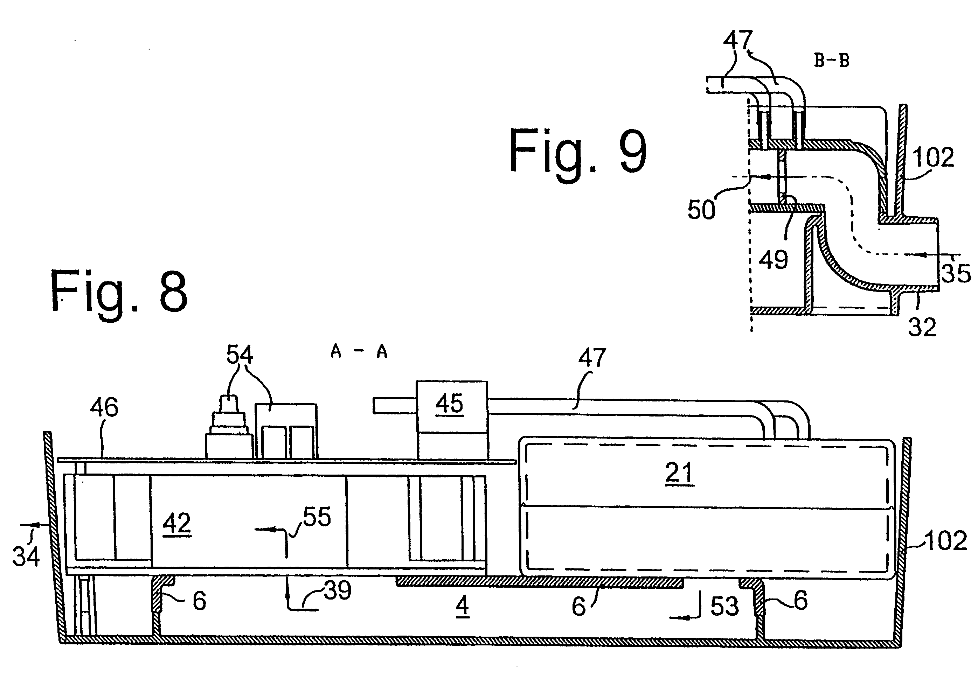

Es wurde eingangs darauf hingewiesen, daß der Detektorkopf 21 mit seinem Gehäuse 1 das Herzstück eines Brandmelders sein kann. Dieser Brandmelder weist außer dem Detektorkopf 21, nämlich dem eigentlichen Streulichtdetektor, weitere Bauteile wie einen Lüfter 42 (Fig. 7), einen Luftstromsensor 45 (Fig. 8), ein Anzeigefeld 36 und verschiedene Platinen mit Steuerungsund Auswerteschaltungen auf. Diese Bauteile sind in einem Gesamtgehäuse 100 untergebracht, welches in Fig. 6 dargestellt ist. Dieses Gehäuse 100 besteht aus drei Teilen, nämlich aus einer Unterschale 101 mit einem integrierten Strömungskanal 4 (Fig. 8) zur Ableitung der Luft in Strömungsrichtung hinter der Auslaßöffnung 5 des Detektorkopfs 21, des weiteren aus einem Deckel 6 (Fig. 8) für einen Teil des Strömungskanals 4, und aus einer Oberschale 102. Der obere Teil der Fig. 6 zeigt eine Ansicht der Rückwand 37 des Gehäuses 100, in welcher sich ein Luftauslaßgitter 31 befindet. Der mittlere Teil der Fig. 6 zeigt eine Draufsicht auf die Oberschale 102 mit einem Anzeigefeld 36 und einem Lufteinlaßstutzen 32 an der Stirnseite 38. An den Lufteinlaßstutzen 32 wird ein hier nicht dargestelltes Ansaugrohr angeschlossen, wenn der Detektorkopf 21 mit dem Gehäuse 100 innerhalb einer aspirativen Brandmeldeanlage in Betrieb genommen wird. Durch den Lufteinlaßstutzen 32 wird die eingangs beschriebene repräsentative Teilmenge der Umgebungsluft eines zu überwachenden Raumes oder der Gerätekühlluft eines zu überwachenden Gerätes in Richtung des Pfeils 35 mittels des hier nicht dargestellten Lüfters in das Gehäuse 100 eingesogen und verläßt nach Durchströmen des Detektorkopfes 21 (Fig. 7) und des Strömungskanals 4 (Fig. 7 und 8) das Gehäuse 100 wieder in Richtung des Luftauslaßpfeils 34 durch das Auslaßgitter 31. Im unteren Teil zeigt die Fig. 6 die Stirnseite 38 des Gehäuses 100, mit dem Lufteinlaßstutzen 32 und einigen Kabeleinlässen 33.

Fig. 7 zeigt eine Draufsicht auf die Unterschale des Gehäuses 100, in welchem als wesentliche Bauteile der Detektorkopf 21, der Lüfter 42, der Luftstromsensor 45 (Fig. 8) und der Strömungskanal 4 untergebracht sind. Die durch den Lüfter 42 angesaugte Luft tritt in Richtung des Strömungspfeils 35 durch den Lufteinlaßstutzen 32 in zunächst horizontaler Richtung (parallel zur Empfängerachse 14) in das Gehäuse 100 ein, tritt danach in senkrechter Richtung durch die Einlaßöffnung 3 des Detektorkopfes 21 in den Detektorkopf 21 ein und folgt danach wiederum in horizontaler Richtung dem Strömungspfad 7 durch das Streulichtzentrum 11 bis zur Auslaßöffnung 5 des Detektorkopfes 21, durch welche die Luft den Detektorkopf in senkrechter Richtung nach unten in Richtung des Strömungspfeils 40 verläßt und in den darunter befindlichen Strömungskanal 4 eintritt. Dieser ist in Fig. 7 größtenteils gestrichelt dargestellt, da er unterhalb des Detektorkopfes 21 und des Lüfters 42 angeordnet ist. Die Luft folgt im Strömungskanal 4 dem Strömungspfeil 41 und tritt dann in senkrechter Richtung entlang des Strömungspfeils 39 von unten in den Lüfter 42 ein, und durchströmt den Lüfter in Richtung des Pfeils 55 und verläßt das Gehäuse 100 in Richtung der Strömungspfeile 34 durch das Luftauslaßgitter 31 (Fig. 6).

Fig. 8 zeigt einen Schnitt durch das Brandmeldergehäuse 100 entlang der Linie A-A der Fig. 7, und Fig. 9 zeigt einen entsprechenden Schnitt entlang der Linie B-B der Fig. 7. Anhand dieser beiden Schnittdarstellungen wird neben der Anordnung der einzelnen Bauelemente, nämlich des Detektorkopfs 21, des Luftstromsensors 45, des Strömungskanals 4, des Deckels 6 für den Strömungskanal 4 und des Lüfters 42, insbesondere auch deutlich, daß der Stömungspfad 7 durch das Streulichtzentrum 11 innerhalb des Detektorkopfes 21 und der Strömungskanal 4 zur Ableitung der angesaugten Luft in Richtung zum Lüfter 42 in verschiedenen Ebenen des Gehäuses 100 verlaufen. Während der Lüfter 42 und der Detektorkopf 21 sowie eine Platine 46 mit der Auswerteschaltung 54 und der Luftstromsensor 45 mit seinen Schlauchanschlüssen 47 im oberen Teil der Unterschale 102 des Gehäuses 100 untergebracht sind, verläuft der Strömungskanal 4 im unteren Teil der Unterschale 102 und ist gegen alle anderen Bauteile mit Ausnahme der Auslaßöffnung vom Detektorkopf 21 und der Eintrittsöffnung in den Lüfter 42 mittels des Deckels 6 luftdicht abgeschlossen.

Anhand von Fig. 9 ist erkennbar, daß die angesaugte Luft, welche durch den Lufteinlaßstutzen 32 in Richtung des Pfeils 35 in die Unterschale 102 des Meldergehäuses eintritt, zunächst in horizontaler Richtung, d.h. parallel zur Empfängerachse 14 (Fig. 1 oder 3 oder 7) strömt, dann um 90° senkrecht nach oben und gleich danach wieder um 90° in die Horizontale umgelenkt wird, bevor die Luft in Richtung des Pfeils 50 durch die Durchgangsöffnung der Scheibe 49 in den Einlaßkanal 19 (Fig. 1 und 3) des Detektorkopfes 21 eintritt. Diese zweifache Umlenkung um jeweils 90° erfolgt auch beim Austritt der Luft aus dem Detektorkopf 21 durch die Auslaßöffnung 5, was durch die Strömungspfeile 52 in Fig. 1 und 40 in Fig. 7 dargestellt ist. Diese zweifache Umlenkung dient der Vermeidung eines Eindringens von Außenlicht in das Streulichtzentrum 11, wenn an dem Lufteinlaßstutzen 32 (Fig. 9) kein Ansaugrohr angeschlossen ist.

Fig. 10 zeigt ein zweites Ausführungsbeispiel für einen Streulichtdetektor als Teil einer aspirativen Brandmeldeanlage. Die hier dargestellte Unterschale eines Detektorkopfes zeigt wiederum die Lichtquelle 9 und den Empfänger 13, wobei die Mittelachse 18 des Lichtkegels 20 der Lichtquelle 9 und die Empfängerachse 14 jeweils über Kreuz (wie beim ersten Ausführungsbeispiel) und für einen bestimmten Abschnitt auf der Mittellinie 58 des Strömungspfades 7 verlaufen, und wobei der den Strömungspfad 7 leitende Strömungskanal ein erstes Mal in Strömungsrichtung (s. die Pfeile ohne Bezugsziffern) vor dem Streulichtzentrum und ein zweites Mal in Strömungsrichtung hinter dem Streulichtzentrum eine Biegung aufweist, so daß der Strömungspfad 7 jedes Mal eine Umlenkung erfährt, so daß die dem Empfänger 13 zugeordnete Lichtfalle 23 und die der Lichtquelle 9 zugeordnete Lichtfalle 15 jedes Mal in der Biegung des Strömungskanals angeordnet und damit Teil dieses Strömungskanals sind.

Fig. 11 zeigt ein drittes Ausführungsbeispiel eines solchen Streulichtdetektors. Auch bei diesem Ausführungsbeispiel sind die Lichtfallen 15 bzw. 23 jeweils in einer Biegung des Strömungskanals angeordnet und die Lichtquelle 9 bzw. der Empfänger 13 sind mit ihren Achsen 18 bzw. 14 so ausgerichtet, daß diese für einen bestimmten Abschnitt - nämlich bis zu den beiden Biegungen des Strömungskanals - parallel zu oder auf der Mittellinie 58 des Strömungspfades verläuft. Je nach Ausführungsform-siehe das erste Ausführungsbeispiel gemäß den Figuren 1 bis 9 und das zweite Ausführungsbeispiel gemäß Figur 10 einerseits oder das dritte Ausführungsbeispiel gemäß Figur 11 andererseits - ist die Mittelachse 18 des Lichtkegels 20 der Lichtquelle 9 in der Empfängerachsenebene auf einen Eingangskanal (erstes und zweites Ausführungsbeispiel) oder auf einen Ausgangskanal 59 (drittes Ausführungsbeispiel) gerichtet.

## Patentansprüche

1. Streulichtdetektor, insbesondere zum Detektieren von Partikeln in einem Trägermedium, mit einem Gehäuse (1), mit einer Einlaßöffnung (3) und einer Auslaßöffnung (5) in dem Gehäuse (1), zwischen denen das Trägermedium das Gehäuse (1) auf einem Strömungspfad (7) durchströmt, mit einer Lichtquelle (9), die Licht auf ein Streulichtzentrum (11) richtet, das auf dem Stömungspfad (7) liegt, mit einem Empfänger (13) für einen Teil des im Streulichtzentrum (11) an Partikeln gestreuten Lichts, und mit einer Lichtfalle (15) für nicht im Streulichtzentrum (11) gestreutes Licht,
**dadurch gekennzeichnet,daß**
die Lichtquelle (9) außerhalb des Strömungspfades (7) angeordnet ist, daß die Mittelachse (18) des Lichtkegels (20) der Lichtquelle (9) wenigstens teilweise parallel zu oder auf der Mittellinie (58) des Strömungspfades (7) verläuft, und daß die der Lichtquelle (9) zugeordnete Lichtfalle (15) Teil des den Strömungspfad (7) leitenden Strömungskanals ist.

2. Streulichtdetektor nach dem Oberbegriff des Anspruchs 1,
**dadurch gekennzeichnet,daß**
der Empfänger (13) außerhalb des Strömungspfades (7) angeordnet ist, daß die Empfängerachse (14) wenigstens teilweise parallel zu oder auf der Mittellinie (58) des Strömungspfades (7) verläuft, und daß die dem Empfänger zugeordnete Lichtfalle (23) Teil des den Strömungspfad (7) leitenden Strömungskanals ist.

3. Streulichtdetektor nach Anspruch 1 oder 2,
**dadurch gekennzeichnet,daß**
die Lichtfalle (15; 23) derart ausgebildet ist, daß sie, in einer Querschnittsebene (17) gesehen, die senkrecht auf der durch die Empfängerachse (14) und die Mittelachse (18) des Lichtkegels (20) der Lichtquelle (9) gebildete Empfängerachsenebene (12) steht, die Form eines Trichters aufweist, der sich in Richtung der Lichtquelle (9) beziehungsweise des Empfängers (13) öffnet.

4. Streulichtdetektor, nach Anspruch 1 oder 2,
**dadurch gekennzeichnet,daß**
die Lichtfalle (15; 23) derart ausgebildet ist, daß sie, in einer Querschnittsebene (17) gesehen, die senkrecht auf der durch die Empfängerachse (14) und die Mittelachse (18) des Lichtkegels (20) der Lichtquelle (9) gebildete Empfängerachsenebene (12) steht, annähernd die Form einer Parabel aufweist, deren Öffnung zur Lichtquelle (9) beziehungsweise des Empfängers (13) weist.

5. Streulichtdetektor anch Anspruch 3 oder 4,
**dadurch gekennzeichnet,daß**
die Lichtfalle (15; 23) quer zur Querschnittsebene (17) derart ausgebildet ist, daß sie den Strömungspfad (7) des Trägermediums in der Empfängerachsenebene (12) im Bogen (56) durch das Streulichtzentrum (11) zur Auslaßöffnung (5) leitet.

6. Streulichtdetektor nach einem der Ansprüche 3 bis 5,
**dadurch gekennzeichnet,daß**
die Mittelachse (18) des Lichtkegels (20) der Lichtquelle (9) in der Empfängerachsenebene (12) auf einen Eingangskanal (19) gerichtet ist, welcher sich in Strömungsrichtung an die Einlaßöffnung (3) anschließt und in die Lichtfalle (15) übergeht.

7. Streulichtdetektor nach einem der Ansprüche 3 bis 5,
**dadurch gekennzeichnet,daß** die Mittelachse (18) des Lichtkegels (20) der Lichtquelle (9) in der Empfängerachsenebene (12) auf einen Ausgangskanal (59) gerichtet ist, welcher sich in Strömungsrichtung an das Streulichtzentrum (11) anschließt und in die Lichtfalle (15) übergeht.

8. Streulichtdetektor nach Anspruch 3 oder 4,
**dadurch gekennzeichnet,daß**
die Lichtfalle (15; 23) in einem Bogen (56) auf die Mittellinie (57) des Eingangskanals (19) beziehungsweise des Ausgangskanals (59) zu verläuft.

9. Streulichtdetektor nach Anspruch 6, 7 oder 8,
**dadurch gekennzeichnet,daß**
der Strömungspfad (7) nach der Einlaßöffnung (3) zunächst parallel zur Empfängerachse (14) verläuft, bevor er nach Passieren des Eingangskanals (19) durch die Lichtfalle (15) im Bogen durch das Streulichtzentrum (11) zur Auslaßöffnung (5) führt.

10. Streulichtdetektor nach einem der vorstehenden Ansprüche,
**dadurch gekennzeichnet,daß**
der Strömungspfad (7) vor der Einlaßöffnung (3) und/oder nach der Auslaßöffnung (5) wenigstens ein Mal, vorzugsweise aber zwei Mal um wenigstens 90° umgelenkt wird.

11. Steulichtdetektor nach einem der vorstehenden Ansprüche,
**dadurch gekennzeichnet,daß**
die Lichtquelle (9) zwei Lichtemitter (8, 10) aufweist, die in der Querschnittsebene (17) der Lichtfalle (15) übereinander angeordnet sind.

12. Streulichtdetektor nach Anspruch 11,
**dadurch gekennzeichnet,daß**
die zwei Lichtemitter (8, 10) beide im selben Winkel α zur Empfängerachse (14) angeordnet sind.

13. Streulichtdetektor nach Anspruch 11 oder 12,
**dadurch gekennzeichnet,daß**
die zwei Lichtemitter (8, 10) derart zur Empfängerachsenebene (12) geneigt angeordnet sind, daß sich ihre Lichtkegel im Streulichtzentrum (11) kreuzen.

14. Streulichtdetektor nach einem der Ansprüche 1 bis 13,
**dadurch gekennzeichnet,daß**
das Gehäuse (1) des Streulichtdetektors aus einem Kunststoffmaterial besteht, das elektrisch leitende Partikel enthält.

15. Streulichtdetektor nach einem der vorstehenden Ansprüche als Teil eines Gefahrenmelders mit einem Gehäuse (100),
**dadurch gekennzeichnet,daß**
das Gehäuse (100) des Gefahrenmelders aus drei Teilen besteht, nämlich aus einer Unterschale (101) mit einem integrierten Strömungskanal (4) zur Ableitung des Trägermediums in Strömungsrichtung hinter der Auslaßöffnung (5), einem Deckel (6) für einen Teil des Strömungskanals (4), und einer Oberschale (102).

16. Streulichtdetektor nach Anspruch 15,
**dadurch gekennzeichnet,daß**
der Strömungskanal (4) im Bodenbereich des Gehäuses (100) angeordnet ist.

17. Streulichtdetektor nach Anspruch 15 oder 16,
**dadurch gekennzeichnet,daß**
der Strömungspfad (7) durch das Streulichtzentrum (11) und der Strömungskanal (4) zur Ableitung des Trägermediums in verschiedenen Ebenen des Gehäuses (100) verlaufen.

## Claims

1. A scattered light detector, in particular for the detection of particles in a carrier medium, comprising a housing (1) with an inlet opening (3) and an outlet opening (5) in the housing (1), between which the carrier medium flows through the housing (1) on a flow path (7), a light source (9) which directs light to a scattered light centre (11) situated on the flow path (7), a receiver (13) for a portion of the light scattered at particles in the scattered light centre (11), and a light trap (15) for light not scattered in the scattered light centre (11),
**characterised in that**
the light source (9) is arranged outside of the flow path (7), the centre axis (18) of the light cone (20) of the light source (9) extends at least partially parallel to or on the centre axis (58) of the flow path (7), and that the light trap (15) associated with the light source (9) is part of the flow duct guiding the flow path (7).

2. The scattered light detector according to the preamble of Claim 1,
**characterised in that**
the receiver (13) is arranged outside of the flow path (7), the receiver axis (14) extends at least partially parallel to or on the centre line (58) of the flow path (7), and that the light trap (23) associated with the receiver is part of the flow duct guiding the flow path (7).

3. The scattered light detector according to Claim 1 or 2,
**characterised in that**
the light trap (15; 23) is formed in such a manner that, when viewed in a cross-sectional plane (17) which is perpendicular to the plane of the receiver axis (12), which is defined by the receiver axis (14) and the centre axis (18) of the light cone (12) of the light source (9), it has the shape of a funnel which opens towards the light source (9) or the receiver (13), respectively.

4. The scattered light detector according to Claim 1 or 2,
**characterised in that**
the light trap (15; 23) is formed in such a manner that, when viewed in a cross-sectional plane (17) which is perpendicular to the plane of the receiver axis (12), which is defined by the receiver axis (14) and the centre axis (18) of the light cone (12) of the light source (9), it has approximately the shape of a parabola whose opening faces towards the light source (9) or the receiver (13), respectively.

5. The scattered light detector according to Claim 3 or 4,
**characterised in that**
the light trap (15; 23) is formed transversely to the cross-sectional plane (17) in such a manner that it guides the flow path (7) of the carrier medium within the plane of the receiver axis (12) in a curve (56) through the scattered light centre (11) to the outlet opening (5).

6. The scattered light detector according to one of Claims 3 to 5,
**characterised in that**
the centre axis (18) of the light cone (20) of the light source (9) in the plane of the receiver axis (12) is directed to an inlet duct (19) which is connected downstream of the inlet opening (3) and blends into the light trap (15).

7. The scattered light detector according to one of Claims 3 to 5,
**characterised in that**
the centre axis (18) of the light cone (20) of the light source (9) in the plane of the receiver axis (12) is directed to an outlet duct (59) which is connected downstream of the scattered light centre (11) and blends into the light trap (15).

8. The scattered light detector according to Claim 3 or 4,
**characterised in that**
the light trap (15; 23) extends in a curve (56) towards the centre line (57) of the inlet duct (19) or the outlet duct (59), respectively.

9. The scattered light detector according to Claim 6, 7, or 8,
**characterised in that**
the flow path (7) downstream of the inlet opening initially extends parallel to the receiver axis (14), before it leads to the outlet opening (5) in a curve, after having passed the inlet duct (19) through the light trap (19).

10. The scattered light detector according to one of the previous claims,
**characterised in that**
the flow path (7) is deflected at least once, but preferably twice, by at least 90° upstream of the inlet opening (3) and/or downstream of the outlet opening (5).

11. The scattered light detector according to one of the previous claims,
**characterised in that**
the light source (9) comprises two light emitters (8, 10) which are arranged one above the other in the cross-sectional plane (17) of the light trap (15).

12. The scattered light detector according to Claim 11,
**characterised in that**
the two light emitters (8, 10) are both arranged under the same angle a relative to the receiver axis (14).

13. The scattered light detector according to Claim 11 or 12,
**characterised in that**
the two light emitters (8, 10) are arranged inclined relative to the plane of the receiver axis (12) in such a manner that their light cones intersect in the scattered light centre (11).

14. The scattered light detector according to one of Claims 1 to 13,
**characterised in that**
the housing (1) of the scattered light detector consists of a synthetic material which contains electrically conductive particles.

15. The scattered light detector according to one of the previous claims, as part of a danger detector with a housing (100),
**characterised in that**
the housing (100) of the danger detector consists of three parts, i.e. a bottom shell (101) with an integrated flow duct (4) for discharging the carrier medium in the flow direction behind the outlet opening (5), a cover (6) for a portion of the flow duct (4), and a top shell (102).

16. The scattered light detector according to Claim 15,
**characterised in that**
the flow duct (4) is arranged in the bottom area of the housing (100).

17. The scattered light detector according to Claim 15 or 16,
**characterised in that**
the flow path (7) through the scattered light centre (11) and the flow duct (4) for discharging the carrier medium extend in different planes.

## Revendications

1. Détecteur de lumière diffuse, en particulier pour détecter des particules dans un milieu porteur comprenant :
- un boîtier (1) ;
- un orifice d'admission (3) et un orifice de sortie (5) dans le boîtier (1), entre lesquels le milieu porteur traverse le boîtier (1) suivant une voie d'écoulement (7) ;
- une source de lumière (9) qui dirige la lumière sur un centre de lumière diffuse (11) placé sur la voie d'écoulement (7) ;
- un récepteur (13) pour une partie de la lumière diffusée aux particules dans le centre de lumière diffuse (11) ; et
- un piège de lumière (15) pour la lumière qui n'est pas diffusée dans le centre de lumière diffuse (11),
**caractérisé en ce que** :
- la source de lumière (9) est agencée à l'extérieur de la voie d'écoulement (7) ;
- l'axe médian (18) du cône lumineux (20) de la source de lumière (9) s'étend au moins en partie parallèlement à ou sur la ligne médiane (58) de la voie d'écoulement (7) ; et
- le piège de lumière (15) associé à la source de lumière (9) fait partie du canal d'écoulement qui guide la voie d'écoulement (7).

2. Détecteur de lumière diffuse selon le préambule de la revendication 1, **caractérisé en ce que** le récepteur (13) est agencé à l'extérieur de la voie d'écoulement (7), l'axe (14) du récepteur s'étend au moins en partie parallèlement à ou sur la ligne médiane (58) de la voie d'écoulement (7), et le piège de lumière (23) associé au récepteur fait partie du canal d'écoulement qui guide la voie d'écoulement (7).

3. Détecteur de lumière diffuse selon l'une ou l'autre des revendications 1 et 2, **caractérisé en ce que** le piège de lumière (15, 23), vu dans un plan de coupe transversale (17) perpendiculaire au plan axial (12) du récepteur, formé par l'axe (14) du récepteur et par l'axe médian (18) du cône lumineux (20) de la source de lumière (9), a la forme d'un entonnoir qui s'ouvre en direction de la source de lumière (9) ou du récepteur (13).

4. Détecteur de lumière diffuse selon l'une ou l'autre des revendications 1 et 2, vu dans un plan de coupe transversale (17) perpendiculaire au plan axial (12) du récepteur, formé par l'axe (14) du récepteur et par l'axe médian (18) du cône lumineux (20) de la source de lumière (9), a approximativement la forme d'une parabole dont l'ouverture est dirigée vers la source de lumière (9) ou vers le récepteur (13).

5. Détecteur de lumière diffuse selon l'une ou l'autre des revendications 3 et 4, **caractérisé en ce que** le piège de lumière (15, 23) est réalisé perpendiculairement au plan de coupe transversale (17) de manière à diriger la voie d'écoulement (7) du milieu porteur dans le plan axial (12) du récepteur, en arc de cercle (56), à travers le centre de lumière diffuse (11) vers l'orifice de sortie (5).

6. Détecteur de lumière diffuse selon l'une des revendications 3 à 5, **caractérisé en ce que** l'axe médian (18) du cône lumineux (20) de la source de lumière (9) est dirigé dans le plan axial (12) du récepteur vers un canal d'entrée (19) qui se raccorde à l'orifice d'admission (3) dans la direction d'écoulement et se transforme dans le piège de lumière (15).

7. Détecteur de lumière diffuse selon l'une des revendications 3 à 5, **caractérisé en ce que** l'axe médian (18) du cône lumineux (20) de la source de lumière (9) est dirigé dans le plan axial (12) du récepteur vers un canal de sortie (59) qui se raccorde au centre de lumière diffuse (11) dans la direction d'écoulement et se transforme dans le piège de lumière (15).

8. Détecteur de lumière diffuse selon l'une ou l'autre des revendications 3 et 4, **caractérisé en ce que** le piège de lumière (15, 23) s'étend en arc de cercle (56) vers la ligne médiane (57) du canal d'entrée (19) ou du canal de sortie (59).

9. Détecteur de lumière diffuse selon la revendication 6, 7 ou 8, **caractérisé en ce que** la voie d'écoulement (7) s'étend après l'orifice d'admission (3), tout d'abord parallèlement à l'axe (14) du récepteur, avant de se diriger vers l'orifice de sortie (5) après avoir traversé le canal d'entrée (19) par le piège de lumière (15) en arc de cercle à travers le centre de lumière diffuse (11).

10. Détecteur de lumière diffuse selon l'une des revendications précédentes, **caractérisé en ce que** la voie d'écoulement (7) est déviée d'au moins 90° avant l'orifice d'admission (3) et/ou après l'orifice de sortie (5) au moins une fois, mais de préférence deux fois.

11. Détecteur de lumière diffuse selon l'une des revendications précédentes, **caractérisé en ce que** la source de lumière (9) comprend deux émetteurs de lumière (8, 10) qui sont agencés l'un au-dessus de l'autre dans le plan de coupe transversale (17) du piège de lumière (15).

12. Détecteur de lumière diffuse selon la revendication 11, **caractérisé en ce que** les deux émetteurs de lumière (8, 10) sont agencés tous les deux sous le même angle α par rapport à l'axe (14) du récepteur.

13. Détecteur de lumière diffuse selon l'une ou l'autre des revendications 11 et 12, **caractérisé en ce que** les deux émetteurs de lumière (8, 10) sont agencés avec inclinaison par rapport au plan (12) axial du récepteur de sorte que leurs cônes lumineux se croisent dans le centre de lumière diffuse (11).

14. Détecteur de lumière diffuse selon l'une des revendications 1 à 13, **caractérisé en ce que** le boîtier (1) du détecteur de lumière diffuse se compose de matériau en matière plastique qui contient des particules électriquement conductrices.

15. Détecteur de lumière diffuse selon l'une des revendications précédentes à titre d'avertisseur de danger avec un boîtier (100), **caractérisé en ce que** le boîtier (100) de l'avertisseur de danger se compose de trois parties, à savoir : une coque inférieure (101) avec un canal d'écoulement (4) intégré pour dériver le milieu porteur dans la direction d'écoulement derrière l'orifice de sortie (5), un couvercle (6) pour une partie du canal d'écoulement (4), et une coque supérieure (102).

16. Détecteur de lumière diffuse selon la revendication 15, **caractérisé en ce que** le canal d'écoulement (4) est agencé dans le fond du boîtier (100).

17. Détecteur de lumière diffuse selon l'une ou l'autre des revendications 15 et 16, **caractérisé en ce que** la voie d'écoulement (7) qui traverse le centre de lumière diffuse (11) et le canal d'écoulement (4) destiné à dériver le milieu porteur s'étendent dans des plans différents du boîtier (100).
